# EUROPEAN PATENT APPLICATION

(11) **EP 4 703 867 A1**
(43) Date of publication of application: **04.03.2026**
(21) Application number: 25195439.2
(22) Date of filing: 12.08.2025
(51) Int. Cl.: G06F 3/16, H04N 21/43, H04R 3/12

(54) **METHOD FOR ELECTRONIC DEVICE, ELECTRONIC DEVICE, AND COMPUTER-READABLE STORAGE MEDIUM**

(30) Priority: 27.08.2024 CN 202411183517
(71) Applicant: Harman International Industries, Incorporated, Stamford, CT 06901 (US)
(72) Inventor: XUE, Baihui, Shenzhen, 518057 (CN); TANG, Chuanlong, Shenzhen, 518057 (CN); SUO, Suma, Shenzhen, 518057 (CN); WAN, Yulin, Shenzhen, 518057 (CN); DOU, Yudong, Shenzhen, 518057 (CN); YE, Wei, Shenzhen, 518057 (CN)
(74) Representative: Rummler, Felix

(57) **Abstract**

Embodiments of the present disclosure provide a method for an electronic device, an electronic device, and a computer-readable storage medium. A method for a first electronic device comprises: transmitting an audio playback instruction to a second electronic device in response to detecting that the second electronic device is connected with the first electronic device, where the audio playback instruction instructs the second electronic device to play audio synchronously with the first electronic device; and playing the audio synchronously with the second electronic device, where a first part of the audio is played by the first electronic device, and a second part of the audio is played by the second electronic device, where the first part of the audio includes at least one of a human voice part of the audio and a high-frequency part of the audio, and the second part of the audio includes at least one of an ambient sound part of the audio and a low-frequency part of the audio. The method for an electronic device of the present disclosure can avoid the problem of auditory direction misalignment for a user when multiple electronic devices play audio synchronously, thereby improving the immersive experience for the user.

## Description

### Technical Field

The present disclosure relates to the fields of audio processing, electronics and electricity, and the like, and more specifically, to a method and apparatus for an electronic device, an electronic device, and a computer-readable storage medium.

### Background

Portable electronic devices such as laptops, mobile phones, and tablet computers have become the main channels for people to obtain multimedia information. However, portable electronic devices often have limited performance and cannot provide users with a rich audio-visual experience. Therefore, it is necessary to connect the portable electronic devices with other electronic devices (e.g., loudspeakers, speakers, etc.) and enhance the immersive experience for the users by using the audio multi-device playback technology.

By using audio multi-device playback technology to process the audio for the electronic devices, multiple electronic devices can play the audio synchronously, providing users with a richer and more flexible audio experience in application scenarios such as home entertainment, commercial presentations, and conferences.

For example, in a home environment, users can connect audio source devices such as mobile phones and computers to multiple loudspeakers or speakers to achieve synchronous audio playback throughout the house. This not only enhances the home entertainment experience, but also allows the volume and sound effects to be adjusted based on the room size and layout. In shopping malls, exhibitions, and other places, audio multi-device playback technology can synchronously transmit audio content such as background music and product introductions to multiple acoustic devices. This helps create a unified atmosphere and display effect, attract the attention of the customers, and enhance the brand image. In conferences or presentations, audio multi-device playback technology can ensure that participants in different locations can clearly hear the voice of the speaker. By configuring multiple audio devices and adjusting the volume and sound effects, the conference efficiency and quality can be improved and noise interference can be reduced.

It is one of the current research focuses in the field of audio processing to ensure the synchronization of the audio played by the devices and provide users with a good immersive experience during multi-device playback.

### Summary of the Invention

In order to improve the immersive experience for users when multiple electronic devices play audio synchronously, the present disclosure provides a method for a first electronic device, comprising: transmitting an audio playback instruction to a second electronic device in response to detecting that the second electronic device is connected with the first electronic device, where the audio playback instruction instructs the second electronic device to play audio synchronously with the first electronic device; and playing the audio synchronously with the second electronic device, where a first part of the audio is played by the first electronic device, and a second part of the audio is played by the second electronic device, and where the first part of the audio includes at least one of a human voice part of the audio and a high-frequency part of the audio, and the second part of the audio includes at least one of an ambient sound part of the audio and a low-frequency part of the audio.

According to an embodiment of the present disclosure, transmitting the audio playback instruction to the second electronic device comprises: dividing the audio into the first part of the audio and the second part of the audio; generating information related to the first part of the audio and information related to the second part of the audio; and transmitting the information related to the second part of the audio to the second electronic device, where the audio playback instruction includes the information related to the second part of the audio; and playing the audio synchronously with the second electronic device comprises: playing the first part of the audio based on the information related to the first part of the audio.

According to an embodiment of the present disclosure, the audio playback instruction includes information related to at least one of a gain of the first part of the audio and a gain of the second part of the audio, and playing the audio synchronously with the second electronic device comprises: adjusting the gain of the first part of the audio based on the information related to at least one of the gain of the first part of the audio and the gain of the second part of the audio.

According to an embodiment of the present disclosure, playing the first part of the audio by the first electronic device comprises: adjusting the audio according to characteristics of the first electronic device to play the first part of the audio, where the characteristics of the first electronic device include at least one of a frequency response of the first electronic device and an audio channel corresponding to the first electronic device.

According to an embodiment of the present disclosure, the first electronic device is further used for playing a video or an image corresponding to the audio, the second electronic device is a loudspeaker or a device including a loudspeaker, and the method further comprises playing the video or the image corresponding to the audio synchronously in the process of playing the audio synchronously with the second electronic device.

An embodiment of the present disclosure further provides a method for a second electronic device, comprising: receiving an audio playback instruction from a first electronic device in response to detecting that the second electronic device is connected with the first electronic device, where the audio playback instruction instructs the second electronic device to play audio synchronously with the first electronic device; and playing the audio synchronously with the first electronic device, where a first part of the audio is played by the first electronic device, and a second part of the audio is played by the second electronic device, and where the first part of the audio includes at least one of a human voice part of the audio and a high-frequency part of the audio, and the second part of the audio includes at least one of an ambient sound part of the audio and a low-frequency part of the audio.

According to an embodiment of the present disclosure, the audio playback instruction includes first information related to an audio sampling rate of the first electronic device, the audio sampling rate of the first electronic device indicating time required for the first electronic device to play a unit audio segment, and playing the audio synchronously with the first electronic device comprises: obtaining second information related to an audio sampling rate of the second electronic device, the audio sampling rate of the second electronic device indicating time required for the second electronic device to play the unit audio segment; and adjusting the audio sampling rate of the second electronic device based on the first information and the second information.

An embodiment of the present disclosure further provides an electronic device comprising a memory, and a processor coupled to the memory and configured to execute the method mentioned above.

An embodiment of the present disclosure further provides an information processing apparatus for a first electronic device, comprising: an instruction transmitting module configured to: transmit an audio playback instruction to a second electronic device in response to detecting that the second electronic device is connected with the first electronic device, where the audio playback instruction instructs the second electronic device to play audio synchronously with the first electronic device; and an audio synchronization module configured to: play the audio synchronously with the second electronic device, where a first part of the audio is played by the first electronic device, and a second part of the audio is played by the second electronic device, and where the first part of the audio includes at least one of a human voice part of the audio and a high-frequency part of the audio, and the second part of the audio includes at least one of an ambient sound part of the audio and a low-frequency part of the audio.

An embodiment of the present disclosure further provides an information processing apparatus for a second electronic device, comprising: an instruction receiving module configured to: receive an audio playback instruction from a first electronic device in response to detecting that the second electronic device is connected with the first electronic device, where the audio playback instruction instructs the second electronic device to play audio synchronously with the first electronic device; and an audio synchronization module configured to: play the audio synchronously with the first electronic device, where a first part of the audio is played by the first electronic device, and a second part of the audio is played by the second electronic device, and where the first part of the audio includes at least one of a human voice part of the audio and a high-frequency part of the audio, and the second part of the audio includes at least one of an ambient sound part of the audio and a low-frequency part of the audio.

An embodiment of the present disclosure further provides a computer program product including computer software codes which, when executed by a processor, provide the method mentioned above.

An embodiment of the present disclosure further provides a computer-readable storage medium having computer-executable instructions stored thereon, which, when executed by a processor, provide the method mentioned above.

The method for an electronic device disclosed in the present disclosure can ensure the synchronization of audio played by multiple electronic devices when the devices play the audio synchronously, so that each device plays the audio with its optimal performance, avoiding the problem of auditory direction misalignment for the user, thereby providing the user with a better immersive listening experience.

### Description of the Drawings

In order to more clearly illustrate the technical solutions of the embodiments of the present disclosure, the drawings required for describing the embodiments are briefly introduced below. Apparently, the drawings in the following description show only some exemplary embodiments of the present disclosure, and for those of ordinary skills in the art, other drawings can also be obtained based on these drawings without making creative effort.

Here, in the drawings:
FIGS. 1A-1B are schematic diagrams illustrating application scenarios according to embodiments of the present disclosure;
FIGS. 2A-2B are schematic flowcharts illustrating methods for an electronic device according to embodiments of the present disclosure;
FIG. 3 is a schematic diagram illustrating an information processing process for an electronic device according to an embodiment of the present disclosure;
FIGS. 4A-4B are schematic diagrams illustrating the composition of information processing apparatuses for an electronic device according to embodiments of the present disclosure; and
FIG. 5 illustrates an architecture of a computing device according to an embodiment of the present disclosure.

### Detailed Description

In order to make the objectives, technical solutions, and advantages of the present disclosure more obvious, exemplary embodiments according to the present disclosure will be described in detail below with reference to the drawings. Apparently, the described embodiments are merely some of the embodiments of the present disclosure, rather than all the embodiments of the present disclosure. It should be understood that the present disclosure is not limited by the exemplary embodiments described herein.

Further, in this specification and the drawings, substantially the same or similar steps and elements are denoted by the same or similar reference numerals, and duplicated description of these steps and elements will be omitted.

Further, in this specification and the drawings, elements are described in the singular or in the plural depending on the embodiment. However, the singular and plural forms are appropriately selected for the presented cases merely for convenience of explanation and are not intended to limit the present disclosure thereto. Therefore, a singular form may include a plural form and a plural form may also include a singular form, unless expressively stated otherwise in the context.

In addition, in this specification and the drawings, the terms "first/second" involved are merely used to distinguish similar objects and do not represent a specific ordering of the objects. It can be understood that "first/second" can be interchanged in a specific order or sequence where permitted, so that the embodiments of the present disclosure described herein can be implemented in an order other than that illustrated or described herein.

Further, in this specification and the drawings, unless expressly stated otherwise, "connection" does not necessarily mean "direct connection" or "direct contact"; rather, "connection" may refer to both a fixation function and electrical communication herein.

The embodiments of the present disclosure will be further described below in conjunction with the drawings.

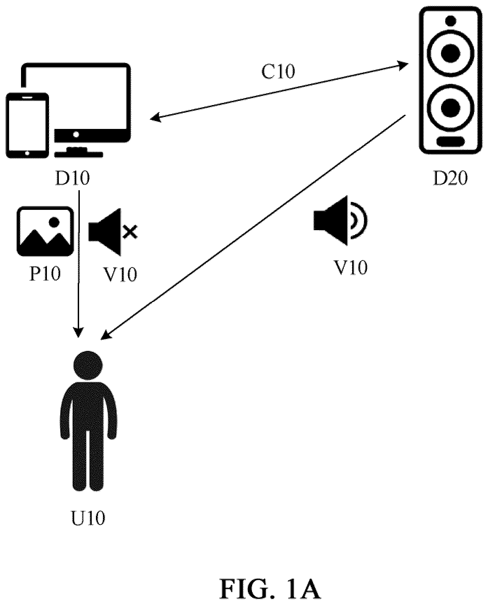

FIG. 1A is a schematic diagram illustrating an application scenario according to an embodiment of the present disclosure.

Portable electronic devices such as laptops, mobile phones, tablets, and wearable devices (e.g., virtual reality electronic devices) often have limited performance and cannot provide users with a rich audio-visual experience. Therefore, it is necessary to connect the portable electronic device with other electronic devices (e.g., loudspeaker, speakers, and multimedia electronic devices (e.g., televisions, computers, and projectors capable of playing multimedia), etc.) to jointly enhance the immersive experience for the user.

In order to enable multiple electronic devices to jointly enhance the immersive experience for the user, it is usually necessary to configure the entire system including the multiple electronic devices so that each electronic device can make full use of its performance to provide the user with a better audio-visual experience. This process needs to consider issues such as the number of the electronic devices, the installation location of each electronic device, the device performance, and the balance of sounds provided by the electronic devices. Therefore, whenever the location, number, connection method, etc., of the electronic devices change, the entire system including the multiple electronic devices needs to be reconfigured, which increases the manpower burden. Although the performance of a single portable electronic device can be optimized through software algorithms to provide a virtualized audio-visual experience, this method is far less effective than connecting the portable electronic device with other electronic devices and jointly providing audio-visual services based on the multiple electronic devices.

As shown in FIG. 1A, when a portable electronic device is used as a first electronic device D10 and another electronic device is used as a second electronic device D20, the first electronic device D10 can be connected with the second electronic device D20 to enhance the immersive experience for the user. The connection C10 between the first electronic device D10 and the second electronic device D20 may be a wired connection and/or a wireless connection. For example, the connection C10 may be a cable (e.g., AUX, HDMI, or USB cable) connection, a Bluetooth connection, a WiFi connection, a radio connection, and the like.

Generally, when the second electronic device D20 is connected to the first electronic device D10 via the connection C10, the speaker of the first electronic device D10 is automatically turned off, and the sound is played by the speaker of the second electronic device D20. For example, it is assumed that the first electronic device D10 is a mobile phone, the second electronic device D20 is a loudspeaker, and the first electronic device D10 is playing a video (the video includes two parts: a picture P10 and an audio V10). Then, when the second electronic device D20 is connected to the first electronic device D10, the first electronic device D10 continues to play the video picture P10, but stops playing the audio V10, and the audio V10 is played by the speaker of the second electronic device D20. In this application scenario, the user U10 may obviously feel that the audio of the video is no longer played from the direction of the first electronic device D10, but rather switched to be played from the direction of the second electronic device D20. Since the picture P10 of the video is still played by the first electronic device D10, the user U10 may feel that the auditory direction is misaligned (i.e., the user faces the picture P10 of the video, while the sound comes from one side of the user), resulting in degraded experience.

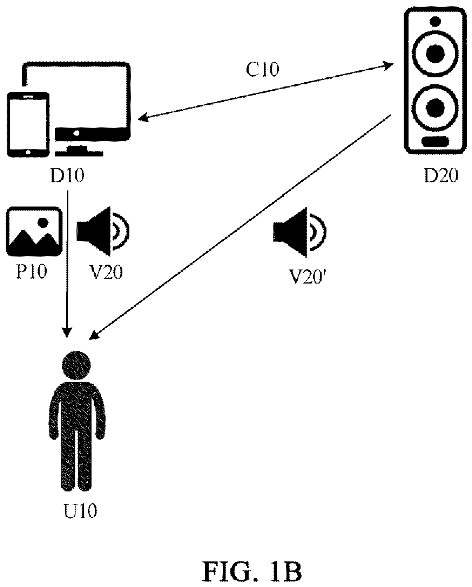

With respect to the problem described in FIG. 1A, the present disclosure proposes to solve the problem of auditory direction misalignment based on the application scenario shown in FIG. 1B, thereby enhancing the immersive experience for the user.

For the application scenario shown in FIG.1B, in a case where the second electronic device D20 is connected to the first electronic device D10 via the connection C10, the speaker of the first electronic device D10 is not automatically turned off, but rather the first electronic device D10 plays a first part of the audio V10 (i.e., the audio V20 shown in FIG. 1B), and the second electronic device D20 plays a second part of the audio V10 (i.e., the audio V20' shown in FIG. 1B). The first part of the audio V10 includes at least one of the human voice part and the high-frequency part of the audio V10, and the second part of the audio V10 includes at least one of the ambient sound part and the low-frequency part of the audio V10.

In this way, the video picture P10, and the human voice part and the high-frequency part of the audio V10 are still played by the first electronic device D10, and the ambient sound part and the low-frequency part of the audio V10 are played by the first electronic device D10. The user U10 will not obviously feel that the direction of the audio has been switched, but rather the surround effect of the audio is significantly enhanced by the second electronic device D20. Therefore, the problem of auditory direction misalignment is effectively solved, enhancing the immersive experience for the user.

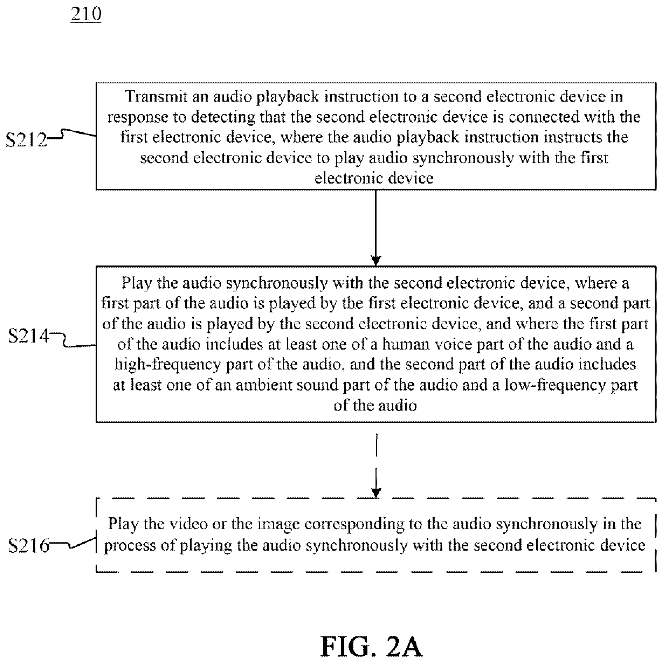

FIG. 2A is a schematic flowchart illustrating a method 210 for a first electronic device according to an embodiment of the present disclosure.

In step S212, an audio playback instruction is transmitted to a second electronic device in response to detecting that the second electronic device is connected with the first electronic device, where the audio playback instruction instructs the second electronic device to play audio synchronously with the first electronic device.

**In** step S214, the audio is played synchronously with the second electronic device, where a first part of the audio is played by the first electronic device, and a second part of the audio is played by the second electronic device, and where the first part of the audio includes at least one of a human voice part of the audio and a high-frequency part of the audio, and the second part of the audio includes at least one of an ambient sound part of the audio and a low-frequency part of the audio.

Since the human ear is more sensitive to the human voice part and the high-frequency part of the audio than the ambient sound part and the low-frequency part of the audio, by having the first electronic device facing the user play the first part of the audio and the second electronic device located in another direction play the second part of the audio, the problem of auditory direction misalignment can be effectively avoided while the sound surround experience for the user can be enhanced.

It should be noted that the first electronic device and the second electronic device may be electronic devices of different types. For example, the first electronic device in the present disclosure may be a portable electronic device such as a laptop computer, a mobile phone, a tablet computer, a wearable device (e.g., a virtual reality electronic device), a portable loudspeaker, or a speaker, and the second electronic device may be a loudspeaker, a speaker, or a multimedia electronic device (e.g., a television capable of playing multimedia, a computer, a projector, etc.)

Alternatively, the first electronic device and the second electronic device may be electronic devices of the same type (e.g., the first electronic device and the second electronic device are both loudspeakers, or the first electronic device and the second electronic device are both computers). Optionally, the first electronic device and the second electronic device may be electronic devices with different performances. The first electronic device may serve as a primary device, and the second electronic device may serve as a secondary device.

According to an embodiment of the present disclosure, the first electronic device can divide the audio into the first part of the audio and the second part of the audio; generate information related to the first part of the audio and information related to the second part of the audio; and transmit the information related to the second part of the audio to the second electronic device, where the audio playback instruction includes the information related to the second part of the audio. During the process in which the first electronic device plays the audio synchronously with the second electronic device, the first electronic device can play the first part of the audio based on the information related to the first part of the audio.

According to an embodiment of the present disclosure, the audio playback instruction includes information related to at least one of a gain of the first part of the audio and a gain of the second part of the audio. During the process in which the first electronic device plays the audio synchronously with the second electronic device, the first electronic device can adjust the gain of the first part of the audio based on the information related to at least one of the gain of the first part of the audio and the gain of the second part of the audio.

For example, the gain of the first part and the gain of the second part of the audio may be adjusted to meet a predetermined proportion. Optionally, frequency domain analysis may be used to adjust the gain of the first part of the audio differently for different frequency bands. This adjustment method can achieve better equalization for the volume of the first part of the audio and the volume of the second part of the audio, thereby ensuring a good listening experience for the user.

According to an embodiment of the present disclosure, the first electronic device can adjust the audio according to characteristics of the first electronic device to play the first part of the audio, where the characteristics of the first electronic device may include at least one of a frequency response of the first electronic device and an audio channel corresponding to the first electronic device. This adjustment method can make full use of the characteristics of the first electronic device, so that the first part of the audio can be played with the highest possible quality.

Optionally, the method 210 for the first electronic device may further include step S216. In step S216, the video or the image corresponding to the audio is played synchronously in the process of playing the audio synchronously with the second electronic device.

It should be understood that in this application scenario, the first electronic device may have a video or image playback function in addition to the audio playback function. The second electronic device may be an electronic device having only an audio playback function, or an electronic device having an audio playback function and a video or image playback function. As an example, the first electronic device is also used for playing a video or image corresponding to the audio, the second electronic device is a loudspeaker or a device including a loudspeaker, and the second electronic device is used for enhancing the audio.

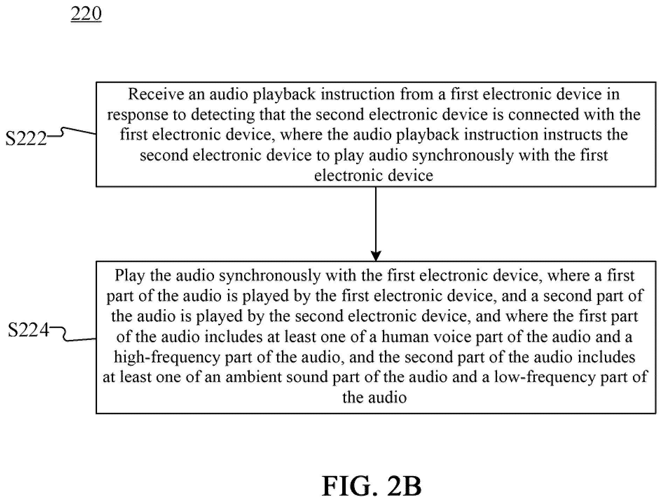

FIG. 2B is a schematic flowchart illustrating a method 220 for a second electronic device according to an embodiment of the present disclosure.

In step S222, an audio playback instruction is received from a first electronic device in response to detecting that the second electronic device is connected with the first electronic device, where the audio playback instruction instructs the second electronic device to play audio synchronously with the first electronic device.

In step S224, the audio is played synchronously with the first electronic device, where a first part of the audio is played by the first electronic device, and a second part of the audio is played by the second electronic device, and where the first part of the audio includes at least one of a human voice part of the audio and a high-frequency part of the audio, and the second part of the audio includes at least one of an ambient sound part of the audio and a low-frequency part of the audio.

It should be understood that there may be one or more second electronic devices. The first electronic device and the second electronic device may be electronic devices of different types, or may be electronic devices of the same type. Optionally, the first electronic device and the second electronic device may be electronic devices with different performances.

According to an embodiment of the present disclosure, the audio playback instruction may include information related to the second part of the audio. The second electronic device can play the second part of the audio based on the information related to the second part of the audio.

According to an embodiment of the present disclosure, the audio playback instruction may include information related to at least one of a gain of the first part of the audio and a gain of the second part of the audio. During the process in which the second electronic device plays the audio synchronously with the first electronic device, the second electronic device can adjust the gain of the second part of the audio based on the information related to at least one of the gain of the first part of the audio and the gain of the second part of the audio.

For example, the gain of the first part and the gain of the second part of the audio may be adjusted to meet a predetermined proportion. Optionally, frequency domain analysis may be used to adjust the gain of the second part of the audio differently for different frequency bands. This adjustment method can achieve better equalization for the volume of the first part of the audio and the volume of the second part of the audio, thereby ensuring a good listening experience for the user.

According to an embodiment of the present disclosure, the second electronic device can adjust the audio according to characteristics of the second electronic device to play the second part of the audio, where the characteristics of the second electronic device include at least one of a frequency response of the second electronic device and an audio channel corresponding to the second electronic device. This adjustment method can make full use of the characteristics of the second electronic device, so that the second part of the audio can be played with the highest possible quality.

According to an embodiment of the present disclosure, the audio playback instruction may include a playback start time of the audio. During the process in which the second electronic device plays the audio synchronously with the first electronic device, the second electronic device can obtain the time when the second electronic device receives the audio playback instruction; and play the audio synchronously with the first electronic device based on the playback start time of the audio and the time when the second electronic device receives the audio playback instruction.

As an example, if the time when the second electronic device receives the audio playback instruction is earlier than the playback start time of the audio, the second electronic device can play the audio at the playback start time of the audio (e.g., assuming that the second electronic device receives the audio playback instruction at 9:00:00, and the playback start time of the audio is 9:00:02, then the second electronic device can play the audio at 9:00:02). If the time when the second electronic device receives the audio playback instruction is later than the playback start time of the audio by a first time, the second electronic device can delete the part of the audio corresponding to the first time at the head and then play the remaining part of the audio (e.g., assuming that the second electronic device receives the audio playback instruction at 9:00:02, and the playback start time of the audio is 9:00:00, then the second electronic device can delete the part of the audio corresponding to the 2 seconds at the head and then play the remaining part of the audio (i.e., assuming that the length of the audio is 10 seconds, start playing the audio from the 3rd second of the audio)). In this way, the synchronization of audio playback between the second electronic device and the first electronic device can be improved.

It should be understood that different electronic devices have different hardware, so different electronic devices also have different audio sampling rates (the audio sampling rate reflects the time required to play a unit audio segment). In order to improve the synchronization of audio playback between the second electronic device and the first electronic device, the audio playback instruction may further include the audio sampling rate of the first electronic device. The second electronic device can adjust the audio sampling rate of the second electronic device based on the audio sampling rate of the first electronic device so that the audio sampling rates of the two electronic devices are consistent. The adjustment process may be performed multiple times during the process in which the second electronic device plays the audio synchronously with the first electronic device. Optionally, the adjustment process may be implemented by hardware or software.

According to an embodiment of the present disclosure, the audio playback instruction may include first information related to an audio sampling rate of the first electronic device, the audio sampling rate of the first electronic device indicating time required for the first electronic device to play a unit audio segment, and playing the audio synchronously with the first electronic device includes: obtaining second information related to an audio sampling rate of the second electronic device, the audio sampling rate of the second electronic device indicating time required for the second electronic device to play the unit audio segment; and adjusting the audio sampling rate of the second electronic device based on the first information and the second information so that the audio sampling rates of the two electronic devices are consistent.

According to an embodiment of the present disclosure, in the process of playing audio synchronously with the first electronic device, a number of the unit audio segments that have been played by the first electronic device when the second electronic device receives the audio playback instruction can further be obtained; and in a case where the first electronic device has played a first number of the unit audio segments, the first number of the unit audio segments at the head of the audio are deleted and then a remaining part of the audio is played.

For example, it is assumed that the audio sampling rate of the first electronic device is 48Khz, that is, the playback speed of the unit audio segment is 1/48K, which is approximately 20.8us. Then, when the first electronic device plays 1000 unit audio segments, the time required is 20800us. If the second electronic device plays only 900 audio unit segments in the same 20800us, it can be determined that the playback speed of the second electronic device is slower than that of the first electronic device. In this case, the audio sampling rate of the second electronic device can be increased to ensure that the second electronic device plays the audio synchronously with the first electronic device. In addition, if the first electronic device has played 1,000 unit audio segments when the second electronic device receives the audio playback instruction, the 1,000 unit audio segments at the head of the audio can be deleted and then the remaining part of the audio can be played to ensure that the second electronic device plays the audio synchronously with the first electronic device.

According to an embodiment of the present disclosure, in the case where the first electronic device and the second electronic device are electronic devices with similar functions, in response to detecting that the second electronic device is connected with the first electronic device, alternatively, the second electronic device can serve as a primary device and the first electronic device as a secondary device (as an example, the second electronic device as the primary device may have better performance than the first electronic device), and the second electronic device executes the steps of the method 210 mentioned above, and the first electronic device executes the steps of the method 220 mentioned above.

For example, a mobile phone serves as a first electronic device to play a video (including audio and picture), and a television serves as a second electronic device to enhance the sound surround effect. Since the television has better audio-visual playback effects than the mobile phone, in the case where the television is connected with the mobile phone, the mobile phone can be switched to as the second electronic device for enhancing the sound surround effect, and the television can be switched to as the first electronic device for playing the video. It should be noted that in order to prevent the problem of auditory direction misalignment, when the mobile phone is switched to as the second electronic device and the television is switched to as the first electronic device, the television plays the first part of the audio (i.e., at least one of the human voice part and the high-frequency part of the audio) and the picture in the video, and the mobile phone plays the second part of the audio (i.e., at least one of the ambient sound part and the low-frequency part of the audio) played by the second electronic device.

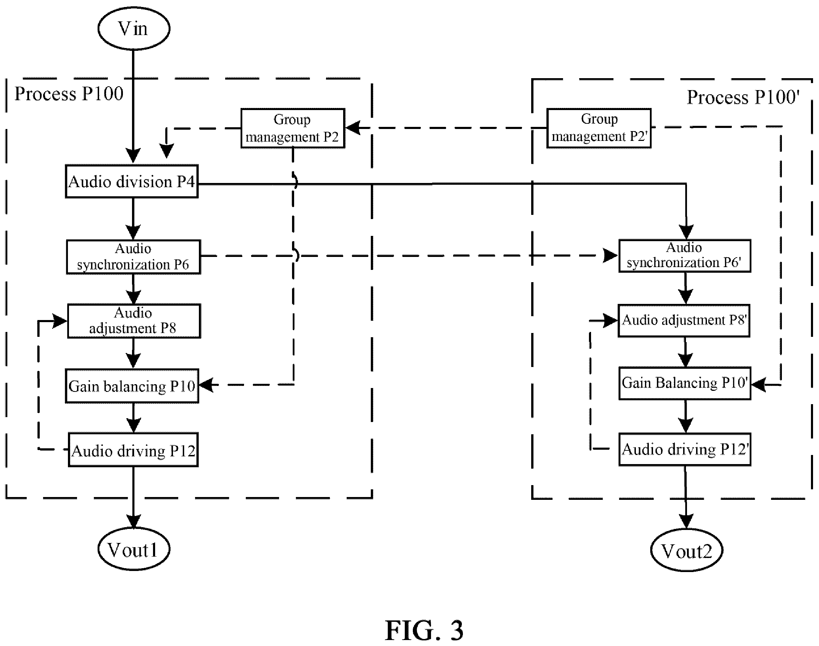

FIG. 3 is a schematic diagram illustrating an information processing process for an electronic device according to an embodiment of the present disclosure. The solid arrows in FIG. 3 represent the processing flow of the audio signal, and the dotted arrows represent the processing flow of the control signal.

As shown in FIG. 3, after receiving the input audio Vin, the first electronic device (i.e., the primary device) can divide the input audio Vin (i.e., through the audio division P4 at the first electronic device) to obtain a first audio and a second audio, where the first audio includes at least one of the human voice part and the high-frequency part of the audio Vin, and the second audio includes at least one of the ambient sound part and the low-frequency part of the audio Vin. Further, after the first audio is processed by the process P100 at the first electronic device, the first electronic device can output the processed audio Vout1. After the second audio is processed by the process P100' at the second electronic device (i.e., the secondary device), the second electronic device can output the processed audio Vout2. By listening to the sound through the first electronic device and the second electronic device at the same time, the user can obtain a better immersive experience.

The process P100 at the first electronic device (i.e., the primary device) may include group management P2, audio division P4, audio synchronization P6, audio adjustment P8, gain balancing P10, and audio driving P12.

The process P100' at the second electronic device (i.e., the secondary device) may include group management P2', audio synchronization P6', audio adjustment P8', gain balancing P10', and audio driving P12'.

Specifically, when it is detected that the second electronic device is connected with the first electronic device, the second electronic device can provide the information of the second electronic device to the first electronic device (through wired and/or wireless communication) to create an audio playback device group including the first electronic device and the second electronic device (i.e., through group management P2 at the first electronic device and group management P2' at the second electronic device). After the audio playback device group is created, the first electronic device and the second electronic device can share device information of each other through communication to achieve synchronous audio playback.

According to an embodiment of the present disclosure, the audio playback device group including the first electronic device and the second electronic device may be created according to a global audio specification. The global audio specification may indicate the types of audio channels supported by the audio playback device group, as well as the number of speakers supported by each type of audio channel, the layout of the speakers, and other information. By automatically allocating appropriate audio channels to the first electronic device and the second electronic device according to the global audio specification, manual labor can be reduced and balanced sound (including volume balance, high and low frequency balance, etc.) with better reverberation effect can be provided.

Next, the first electronic device can divide the input audio Vin through the audio division P4 to obtain the above-mentioned first audio and second audio; generate information related to the first audio and information related to the second audio; and transmit the information related to the second audio to the second electronic device.

Further, the first electronic device and the second electronic device can synchronize audio playback information (i.e., through audio synchronization P6 at the first electronic device and audio synchronization P6' at the second electronic device) through communication (e.g., by transmitting an audio playback instruction to the second electronic device from the first electronic device). For example, the second electronic device can receive the playback start time of the audio from the first electronic device and obtain the time when the second electronic device receives the audio playback instruction; and based on the playback start time of the audio and the time when the second electronic device receives the audio playback instruction, play the audio synchronously with the first electronic device. If the time when the second electronic device receives the audio playback instruction is earlier than the playback start time of the audio, the second electronic device can be instructed to play the audio at the playback start time of the audio; and if the time when the second electronic device receives the audio playback instruction is later than the playback start time of the audio by a first time, the second electronic device can be instructed to delete the part of the audio corresponding to the first time at the head and then play the remaining part of the audio.

According to an embodiment of the present disclosure, the audio playback instruction may further include an audio sampling rate of the first electronic device. In the process of audio synchronization P6', the audio sampling rate of the second electronic device can further be adjusted based on the audio sampling rate of the first electronic device to improve the synchronization of audio playback between the second electronic device and the first electronic device.

According to an embodiment of the present disclosure, in the process of audio synchronization P6', a number of the unit audio segments that have been played by the first electronic device when the second electronic device receives the audio playback instruction can further be obtained; and in a case where the first electronic device has played a first number of the unit audio segments, the first number of the unit audio segments at the head of the audio are deleted and then a remaining part of the audio is played.

In the process of audio adjustment P8, the audio adjustment module of the first electronic device can receive information related to the characteristics of the first electronic device from the audio driving module of the first electronic device, and adjust the first audio according to the information related to the characteristics of the first electronic device, where the characteristics of the first electronic device include at least one of the frequency response of the first electronic device and the audio channel corresponding to the first electronic device (including the number and type of audio channels (e.g., treble audio channel, bass audio channel), etc.)

According to an embodiment of the present disclosure, by adjusting the first audio with the frequency response of the first electronic device taken into account (e.g., when the high-frequency response of the first electronic device is poor, compensating for the high-frequency part of the first audio; smoothing the high-frequency part and the low-frequency part of the first audio, etc.), the audio played by the first electronic device can have good quality in all frequency bands.

According to an embodiment of the present disclosure, in a case where the first electronic device corresponds to multiple audio channels, in the process of audio adjustment P8, the sounds of the multiple audio channels can further be mixed, equalized, filtered, etc., to improve the quality of the first audio.

Through audio adjustment P8, the first audio can be played with the characteristics of the first electronic device taken into account, and the performance of the first electronic device can be fully utilized for adjustment, thereby playing the audio with high quality.

Similarly, in the process of audio adjustment P8', the audio adjustment module of the second electronic device can receive information related to the characteristics of the second electronic device from the audio driving module of the second electronic device, and adjust the second audio according to the information related to the characteristics of the second electronic device, where the characteristics of the second electronic device include at least one of the frequency response of the second electronic device, and the audio channel corresponding to the second electronic device (including the number and type of audio channels (e.g., treble audio channel, bass audio channel), etc.)

According to an embodiment of the present disclosure, by adjusting the second audio with the frequency response of the second electronic device taken into account (e.g., when the low-frequency response of the second electronic device is poor, compensating for the low-frequency part of the second audio; smoothing the high-frequency part and the low-frequency part of the second audio, etc.), the audio played by the second electronic device can have good quality in all frequency bands.

According to an embodiment of the present disclosure, in a case where the second electronic device corresponds to multiple audio channels, in the process of audio adjustment P8', the sounds of the multiple audio channels can further be mixed, equalized, filtered, etc., to improve the quality of the second audio.

Through audio adjustment P8', the second audio can be played with the characteristics of the second electronic device taken into account, and the performance of the second electronic device can be fully utilized for adjustment, thus playing the audio with high quality.

In the process of gain balancing P10, the gain balancing module of the first electronic device can receive information related to at least one of the gain of the first audio and the gain of the second audio from the group management module of the first electronic device, and adjust the gain of the first audio based on the information related to at least one of the gain of the first audio and the gain of the second audio.

Similarly, in the process of gain balancing P10', the gain balancing module of the second electronic device can receive information related to at least one of the gain of the first audio and the gain of the second audio from the group management module of the second electronic device, and adjust the gain of the second audio based on the information related to at least one of the gain of the first audio and the gain of the second audio.

The audio driving module of the first electronic device can provide information related to the characteristics of the first electronic device to the audio adjustment module of the first electronic device, so that the audio adjustment module can make full use of the characteristics of the first electronic device in such a manner that the first audio can be played with the highest possible quality. In addition, the audio driving module of the first electronic device can further output the audio (i.e., audio Vout1) obtained after being processed through audio synchronization P6, audio adjustment P8, and gain balancing P10 to the user.

Similarly, the audio driving module of the second electronic device can provide information related to the characteristics of the second electronic device to the audio adjustment module of the second electronic device, so that the audio adjustment module can make full use of the characteristics of the second electronic device in such a manner that the second audio can be played with the highest possible quality. In addition, the audio driving module of the second electronic device can further output the audio (i.e., audio Vout2) obtained after being processed through audio synchronization P6', audio adjustment P8', and gain balancing P10' to the user.

Therefore, the user can hear the audio Vout1 obtained through process P100 and the audio Vout2 obtained through process P100' at the same time, so as to obtain a better immersive experience.

It should be understood that the above-mentioned process P100 and process P100' may be implemented by hardware and/or software, which is not limited herein. The above-mentioned process P100 and process P100' can ensure the synchronization of the audio played by multiple electronic devices when the devices play the audio synchronously, so that each device plays audio with its optimal performance, avoiding the problem of auditory direction misalignment for the user, thereby providing the user with a better immersive listening experience.

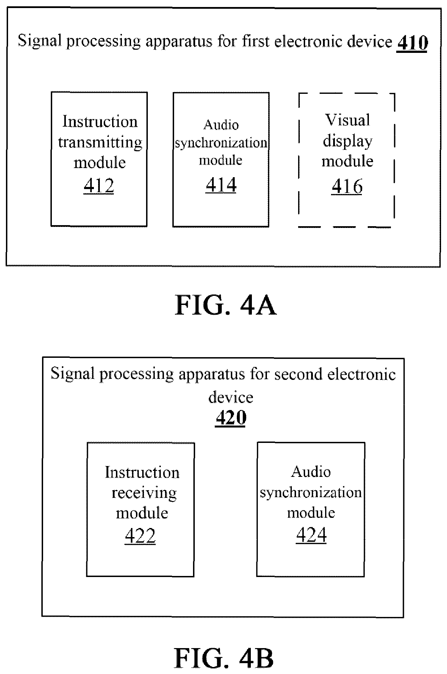

FIG. 4A is a schematic diagram illustrating the composition of an information processing apparatus for a first electronic device 410 according to an embodiment of the present disclosure.

According to an embodiment of the present disclosure, the information processing apparatus for the first electronic device 410 includes an instruction transmitting module 412 and an audio synchronization module 414. Optionally, the information processing apparatus for the first electronic device 410 may further include a visual display module 416.

The instruction transmitting module 412 can be configured to: transmit an audio playback instruction to a second electronic device in response to detecting that the second electronic device is connected with the first electronic device, where the audio playback instruction instructs the second electronic device to play audio synchronously with the first electronic device.

The audio synchronization module 414 can be configured to: play the audio synchronously with the second electronic device, where a first part of the audio is played by the first electronic device, and a second part of the audio is played by the second electronic device, and where the first part of the audio includes at least one of a human voice part of the audio and a high-frequency part of the audio, and the second part of the audio includes at least one of an ambient sound part of the audio and a low-frequency part of the audio.

The visual display module 416 can be configured to: play the video or the image corresponding to the audio synchronously in the process of playing the audio synchronously with the second electronic device.

It should be understood that the information processing apparatus for the first electronic device 410 in FIG. 4A can implement the method 210 for the first electronic device described with respect to FIG. 2A, where the instruction transmitting module 412, the audio synchronization module 414, and the visual display module 416 can be respectively used to implement the processing procedures described with respect to step S212, step S214, and step S216, which will not be described in detail herein.

According to an embodiment of the present disclosure, the information processing apparatus for the first electronic device 410 can be used in the electronic device D10 in the application scenario described with respect to FIG. 1B. That is, the electronic device D10 described in FIG. 1B may be the first electronic device, and the electronic device D20 described in FIG. 1B may be the second electronic device.

FIG. 4B is a schematic diagram illustrating the composition of an information processing apparatus 420 for a second electronic device according to an embodiment of the present disclosure.

According to an embodiment of the present disclosure, the information processing apparatus 420 for the second electronic device includes an instruction receiving module 422 and an audio synchronization module 424.

The instruction receiving module 422 can be configured to: receive an audio playback instruction from a first electronic device in response to detecting that the second electronic device is connected with the first electronic device, where the audio playback instruction instructs the second electronic device to play audio synchronously with the first electronic device.

The audio synchronization module 414 can be configured to: play the audio synchronously with the first electronic device, where a first part of the audio is played by the first electronic device, and a second part of the audio is played by the second electronic device, and where the first part of the audio includes at least one of a human voice part of the audio and a high-frequency part of the audio, and the second part of the audio includes at least one of an ambient sound part of the audio and a low-frequency part of the audio.

It should be understood that the information processing apparatus 420 for the second electronic device in FIG. 4B can implement the method 220 for the second electronic device described with respect to FIG. 2B, where the instruction receiving module 422 and the audio synchronization module 424 can be respectively used to implement the processing procedures described with respect to step S222 and step S224, which will not be described in detail herein.

According to an embodiment of the present disclosure, the information processing apparatus 420 for the second electronic device can be used the an electronic device D20 in the application scenario described with respect to FIG. 1B. That is, the electronic device D10 described in FIG. 1B may be the first electronic device, and the electronic device D20 described in FIG. 1B may be the second electronic device.

In general, various exemplary embodiments of the disclosure may be implemented in hardware or special purpose circuit, software, firmware, logic, or any combination thereof. Some aspects may be implemented in hardware, while other aspects may be implemented in firmware or software which may be executed by a controller, microprocessor or other computing device. When aspects of embodiments of the present disclosure are illustrated or described as a block diagram, a flowchart, or using some other graphical representation, it will be understood that the blocks, apparatuses, systems, techniques, or methods described herein may be implemented as non-limiting examples in hardware, software, firmware, a special purpose circuit or logic, general purpose hardware or controller or other computing device, or some combination thereof.

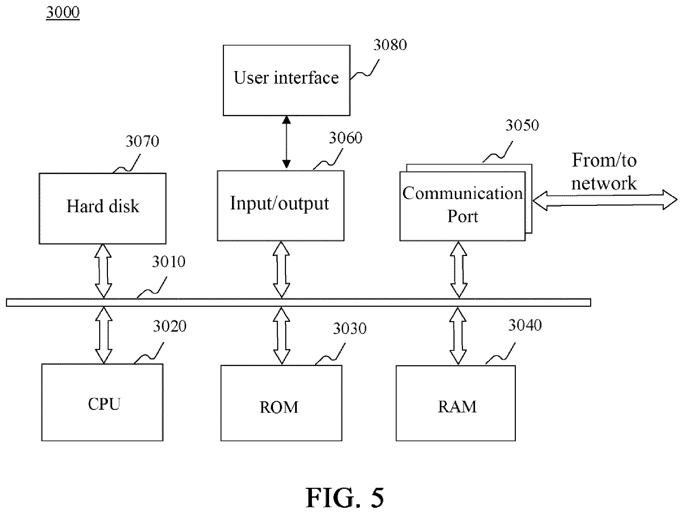

For example, the methods or apparatuses according to embodiments of the present disclosure may also be implemented with the aid of the architecture of the computing device 3000 shown in FIG. 5. As shown in FIG. 5, the computing device 3000 may include a bus 3010, one or more CPUs 3020, a read-only memory (ROM) 3030, a random access memory (RAM) 3040, a communication port 3050 connected to a network, an input/output component 3060, a hard disk 3070, and the like. The storage device in the computing device 3000, such as the ROM 3030 or the hard disk 3070, can store various data or files used for processing and/or communication of the method provided in the present disclosure and program instructions executed by the CPU. The computing device 3000 may also include a user interface 3080. Of course, the architecture shown in FIG. 5 is merely exemplary, and when implementing different devices, one or more components in the computing device shown in FIG. 5 may be omitted according to actual needs.

According to yet another aspect of the present disclosure, a computer-readable storage medium is further provided. The computer-readable storage medium has computer-readable instructions stored thereon. The computer-readable instructions, when executed by a processor, can execute the method according to the embodiments of the present disclosure described with reference to the drawings above. The computer-readable storage medium in the embodiments of the present disclosure may be a volatile memory or a nonvolatile memory, or may include both a volatile and a nonvolatile memory. The nonvolatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), which is used as an external cache. By way of example and not limitation, many forms of RAM are available, such as static random access memory (SRAM), dynamic random access memory (DRAM), synchronous dynamic random access memory (SDRAM), double data rate synchronous dynamic random access memory (DDRSDRAM), enhanced synchronous dynamic random access memory (ESDRAM), synchronous linked dynamic random access memory (SLDRAM), and direct memory bus random access memory (DR RAM). It should be noted that memory of the methods described herein is intended to include, but is not limited to, these and any other suitable types of memory. It should be noted that memory of the methods described herein is intended to include, but is not limited to, these and any other suitable types of memory.

An embodiment of the present disclosure further provides a computer program product or a computer program. The computer program product or the computer program includes computer instructions stored in a computer-readable storage medium. The processor of the computer device reads the computer instructions from the computer-readable storage medium, and the processor executes the computer instructions to cause the computer device to execute the method according to the embodiments of the present disclosure.

An embodiment of the present disclosure further provides an electronic device including a memory, and a processor coupled to the memory and configured to execute the method according to the embodiments of the present disclosure.

In summary, the present disclosure provides a method and an apparatus for an electronic device, an electronic device, and a computer-readable storage medium. A method for a first electronic device includes: transmitting an audio playback instruction to a second electronic device in response to detecting that the second electronic device is connected with the first electronic device, where the audio playback instruction instructs the second electronic device to play audio synchronously with the first electronic device; and playing the audio synchronously with the second electronic device, where a first part of the audio is played by the first electronic device, and a second part of the audio is played by the second electronic device, where the first part of the audio includes at least one of a human voice part of the audio and a high-frequency part of the audio, and the second part of the audio includes at least one of an ambient sound part of the audio and a low-frequency part of the audio. A method for a second electronic device includes: receive an audio playback instruction from a first electronic device in response to detecting that the second electronic device is connected with the first electronic device, where the audio playback instruction instructs the second electronic device to play audio synchronously with the first electronic device; and playing the audio synchronously with the first electronic device, where a first part of the audio is played by the first electronic device, and a second part of the audio is played by the second electronic device, and where the first part of the audio includes at least one of a human voice part of the audio and a high-frequency part of the audio, and the second part of the audio includes at least one of an ambient sound part of the audio and a low-frequency part of the audio.

The method for an electronic device disclosed in the present disclosure can ensure the synchronization of audio played by multiple electronic devices when the devices play the audio synchronously, so that each device plays the audio with its optimal performance, avoiding the problem of auditory direction misalignment for the user, thereby providing the user with a better immersive listening experience.

It should be noted that the flowcharts and block diagrams in the drawings illustrate possible architectures, functions, and operations of systems, methods, and computer program products according to various embodiments of the present disclosure. In this regard, each block in the flowcharts or block diagrams may represent a module, a program segment, or a portion of code, which contains at least one executable instruction for implementing the specified logical function. It should also be noted that, in some alternative implementations, the functions noted in the blocks may occur in an order other than that noted in the drawings. For example, two blocks shown in succession may actually be executed substantially in parallel, or they may sometimes be executed in the reverse order, depending on the functionality involved. It should also be noted that each box in the block diagrams and/or flowcharts and combinations of boxes in the block diagrams and/or flowcharts can be implemented by a dedicated hardware-based system that performs the specified function or operation, or can be implemented by a combination of dedicated hardware and computer instructions.

Specific words are used in the present disclosure to describe the embodiments of the present disclosure. For example, "first/second embodiment", "an embodiment", and/or "some embodiments" mean a feature, structure, or characteristic associated with at least one embodiment of the present disclosure. Accordingly, it should be emphasized and noted that "an embodiment" or " one embodiment" or "an alternative embodiment" referred to two or more times in different places in this specification does not necessarily refer to the same embodiment. In addition, some features, structures, or characteristics of one or more embodiments of the present disclosure may be combined as appropriate.

In the embodiments of the present disclosure, the term "module" or "unit" refers to a computer program or a segment of a computer program that has a predetermined function and works together with other related parts to achieve a predetermined goal, and can be implemented entirely or in part by using software, hardware (such as a processing circuit or memory), or a combination thereof. Likewise, one processor (or a plurality of processors or memories) can be used for implementing one or more modules or units. Further, each module or unit may be a part of an integral module or unit that includes the function of the module or unit.

It should be noted that in the present disclosure, the terms "comprises", "includes", or any other variations thereof are intended to cover non-exclusive inclusion, so that a process, method, article, or device that includes a series of elements includes not only those elements, but also includes other elements that are not explicitly listed, or also includes elements that are inherent to such process, method, article, or device. Without more constraints, an element defined by the phrase "comprising a..." does not exclude the existence of other identical elements in the process, method, article, or device comprising the element.

Further, the series of processes described above include not only processes executed in time series in the order described herein but also processes executed in parallel or separately, not in time series.

Unless otherwise defined, all terms used herein, including technical and scientific terms, have the same meaning as commonly understood by those of ordinary skill in the art to which the present disclosure belongs. It should also be understood that terms such as those defined in common dictionaries should be construed as having a meaning consistent with their meaning in the context of the relevant technology and should not be construed with idealized or extremely formalized meanings unless expressly defined as such herein.

The foregoing is a description of the present disclosure and should not be considered a limitation thereof. Although several exemplary embodiments of the present disclosure are described, it will be readily understood by those skilled in the art that many modifications can be made to the exemplary embodiments without departing from the novel teachings and advantages of the present disclosure. Accordingly, all such modifications are intended to be encompassed within the scope of the present disclosure as defined by the claims. It should be understood that the foregoing is a description of the present disclosure and should not be considered to be limited to the particular embodiments as disclosed, and that modifications to the disclosed embodiments, as well as other embodiments, are intended to be encompassed within the scope of the claims. The present disclosure is defined by the claims and equivalents thereof.

## Claims

1. A method for a first electronic device, comprising:
transmitting an audio playback instruction to a second electronic device in response to detecting that the second electronic device is connected with the first electronic device, wherein the audio playback instruction instructs the second electronic device to play audio synchronously with the first electronic device; and
playing the audio synchronously with the second electronic device, wherein a first part of the audio is played by the first electronic device, and a second part of the audio is played by the second electronic device, and wherein the first part of the audio includes at least one of a human voice part of the audio and a high-frequency part of the audio, and the second part of the audio includes at least one of an ambient sound part of the audio and a low-frequency part of the audio.

2. The method of claim 1, wherein
transmitting the audio playback instruction to the second electronic device comprises:
dividing the audio into the first part of the audio and the second part of the audio;
generating information related to the first part of the audio and information related to the second part of the audio; and
transmitting the information related to the second part of the audio to the second electronic device, wherein the audio playback instruction includes the information related to the second part of the audio;
and playing the audio synchronously with the second electronic device comprises:
playing the first part of the audio based on the information related to the first part of the audio.

3. The method of claim 1 or 2, wherein the audio playback instruction includes information related to at least one of a gain of the first part of the audio and a gain of the second part of the audio, and
playing the audio synchronously with the second electronic device comprises:
adjusting the gain of the first part of the audio based on the information related to at least one of the gain of the first part of the audio and the gain of the second part of the audio.

4. The method of any preceding claim, wherein playing the first part of the audio by the first electronic device comprises:
adjusting the audio according to characteristics of the first electronic device to play the first part of the audio, wherein the characteristics of the first electronic device include at least one of a frequency response of the first electronic device and an audio channel corresponding to the first electronic device.

5. The method of any preceding claim, wherein the first electronic device is further used for playing a video or an image corresponding to the audio, and the second electronic device is a loudspeaker or a device including a loudspeaker,
and the method further comprises: playing the video or the image corresponding to the audio synchronously in the process of playing the audio synchronously with the second electronic device.

6. A method for a second electronic device, comprising:
receiving an audio playback instruction from a first electronic device in response to detecting that the second electronic device is connected with the first electronic device, wherein the audio playback instruction instructs the second electronic device to play audio synchronously with the first electronic device; and
playing the audio synchronously with the first electronic device, wherein a first part of the audio is played by the first electronic device, and a second part of the audio is played by the second electronic device, and wherein the first part of the audio includes at least one of a human voice part of the audio and a high-frequency part of the audio, and the second part of the audio includes at least one of an ambient sound part of the audio and a low-frequency part of the audio.

7. The method of claim 6, wherein the audio playback instruction includes information related to the second part of the audio,
and playing the audio synchronously with the first electronic device comprises:
playing the second part of the audio based on the information related to the second part of the audio.

8. The method of claim 6 or 7, wherein the audio playback instruction includes information related to at least one of a gain of the first part of the audio and a gain of the second part of the audio,
and playing the audio synchronously with the first electronic device comprises:
adjusting the gain of the second part of the audio based on the information related to at least one of the gain of the first part of the audio and the gain of the second part of the audio.

9. The method of any of claims 6 to 8, wherein playing the second part of the audio by the second electronic device comprises:
adjusting the audio according to characteristics of the second electronic device to play the second part of the audio, and wherein the characteristics of the second electronic device include at least one of a frequency response of the second electronic device and an audio channel corresponding to the second electronic device.

10. The method of any of claims 6 to 9, wherein the audio playback instruction includes first information related to an audio sampling rate of the first electronic device, the audio sampling rate of the first electronic device indicating time required for the first electronic device to play a unit audio segment,
and playing the audio synchronously with the first electronic device comprises:
obtaining second information related to an audio sampling rate of the second electronic device, the audio sampling rate of the second electronic device indicating time required for the second electronic device to play the unit audio segment; and
adjusting the audio sampling rate of the second electronic device based on the first information and the second information.

11. The method of claim 10, wherein playing the audio synchronously with the first electronic device further comprises:
obtaining a number of the unit audio segments that have been played by the first electronic device when the second electronic device receives the audio playback instruction; and
in a case where the first electronic device has played a first number of the unit audio segments, deleting the first number of the unit audio segments at the head of the audio and then playing a remaining part of the audio.

12. An electronic device comprising:
a memory, and a processor coupled to the memory and configured to execute the method of any one of claims 1-11.

13. A computer-readable storage medium having computer-executable instructions stored thereon, which, when executed by a processor, cause the method of any one of claims 1-11 to be implemented.
